(19) Europäisches Patentamt / European Patent Office / Office européen des brevets

(11) **EP 3 475 352 B1**

(12) **EUROPÄISCHE PATENTSCHRIFT**

(45) Veröffentlichungstag und Bekanntmachung des Hinweises auf die Patenterteilung:
**29.04.2026   Patentblatt 2026/18**

(21) Anmeldenummer: **17731582.7**

(22) Anmeldetag: **21.06.2017**

(51) Internationale Patentklassifikation (IPC):
**C08J 9/12** (2006.01)     **C08J 9/14** (2006.01)
**C08J 9/18** (2006.01)     **C08J 9/232** (2006.01)
**B29C 44/34** (2006.01)

(52) Gemeinsame Patentklassifikation (CPC):
**C08J 9/18; B29C 44/3461; C08J 9/122;**
**C08J 9/141; C08J 9/232;** B29C 44/3453;
B29K 2077/00; B29K 2101/12; B29K 2995/0063;
C08J 2203/06; C08J 2300/22; C08J 2300/26;
C08J 2371/02; C08J 2377/00; C08J 2377/06

(86) Internationale Anmeldenummer:
**PCT/EP2017/065275**

(87) Internationale Veröffentlichungsnummer:
**WO 2017/220671 (28.12.2017 Gazette 2017/52)**

(54) **VERFAHREN ZUR HERSTELLUNG VON SCHAUMSTOFFPARTIKELN AUS THERMOPLASTISCHEN ELASTOMEREN MIT POLYAMIDSEGMENTEN**

METHOD FOR THE PREPARATION OF FOAM PARTICLES OUT OF THERMOPLASTIC ELASTOMERS WITH POLYAMIDE SEGMENTS

PROCEDE DE PRODUCTION D'ARTICLES EN MOUSSE D'ELASTOMERES THERMOPLASTIQUES COMPRENANT DES SEGMENTS DE POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **23.06.2016  EP 16175980**

(43) Veröffentlichungstag der Anmeldung:
**01.05.2019   Patentblatt 2019/18**

(73) Patentinhaber: **BASF SE**
**67056 Ludwigshafen am Rhein (DE)**

(72) Erfinder:
 • **KEPPELER, Uwe**
   **67056  Ludwigshafen am Rhein (DE)**
 • **BARTL, Juergen**
   **67056 Ludwigshafen am Rhein (DE)**
 • **AHLERS, Juergen**
   **67056 Ludwigshafen am Rhein (DE)**
 • **DAESCHLEIN, Christian**
   **44625 Herne (DE)**
 • **GUTMANN, Peter**
   **67056 Ludwigshafen am Rhein (DE)**
 • **PRISSOK, Frank**
   **49448 Lemfoerde (DE)**

(74) Vertreter: **BASF IP Association**
**BASF SE**
**GBI - Z078**
**67056 Ludwigshafen (DE)**

(56) Entgegenhaltungen:
**WO-A1-2007/082838     WO-A1-2014/198779**
**WO-A1-2015/052265**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Verfahren zur Herstellung von Schaumstoffpartikeln aus thermoplastischen Elastomeren mit Polyamidsegmenten durch Treibmittelimprägnierung in Suspension, sowie Schaumstoffpartikel erhältlich nach dem Verfahren.

Die WO 2011/134996 beschreibt expandierbare Polyamidgranulate und deren Herstellung durch Extrusion einer treibmittelhaltigen Polymerschmelze und Granulation unter Wasser. Die treibmittelhaltigen Granulate können in einem Vorschäumer zu Schaumstoffpartikeln verschäumt und in einem Formteilautomaten zu Partikelschaumstoffen mit hoher Dauergebrauchstemperatur und Lösungsmittelbeständigkeit verschweißt werden.

Die WO 2006/045513 beschreibt geschlossenzellige, vernetzte Schaumstoff -Folien oder -Platten aus Polyether-Polyamid-Blockcopolymeren, die durch Verschäumen einer vernetzten und treibmittelbeladenen Polymerfolie oder Platte in einem Formteilautomaten oder Autoklaven erhältlich sind.

Die WO 2016/030026 und WO 2016/030333 beschreiben Verfahren zur Herstellung von expandierten Polymerpartikel auf Basis von Polyamiden, wie Polyetherblockamide, durch imprägnierung der Polymerschmelze mit einem Treibmittel und Expansion durch eine Düse, bei dem das Polymer ein Kettenverlängerungsmittel, beispielsweise ein Epoxidgruppen aufweisendes Styrol-Acrylatcopolymer beinhaltet.

Die WO 2014/198779 beschreibt ein Verfahren zur Herstellung von expandierten Granulaten aus thermoplastischen Elastomeren mit einer hohen Bruchdehnung durch Granulierung einer mit Kohlenstoffdioxid oder Stickstoff beladenen Polymerschmelze. Als thermoplastische Elastomere werden u.a. Polyethercopolyamide mit elastischen Polyethereinheiten und kristallinen Polyamideinheiten genannt. Die nach diesem Verfahren erhaltenen Schaumpartikel weisen häufig zu hohe Schüttdichten auf.

Die JP-A 60-042432 beschreibt Schaumstoffpartikel aus vernetzten Blockcopolymeren aus kristallinen Polyamidsegmenten und Polyethersegmenten zur Herstellung von elastischen Schaumstoffformteilen. Die nach diesem Verfahren erhaltenen Schaumpartikel weisen ebenfalls zu hohe Schüttdichten auf.

Verfahren zur Herstellung von expandierten Schaumstoffpartikeln aus Polypropylen (EPP) oder bioabbaubaren Polyestern durch Treibmittelimprägnierung in Suspension sind beispielsweise bekannt aus EP 2 336 225 A1 oder WO 2015/052019.

Die WO 2015/052265 beschreibt ein Verfahren zur Herstellung von expandierten, geschlossenzelligen thermoplastischen Elastomerpartikeln mit geschlossener Außenhaut, geringer Dichte und homogener Zellverteilung durch Imprägnierung mit gasförmigem $CO_2$ oder $N_2$ in einem Autoklavreaktor. Dieses Verfahren erfordert sehr hohe Drücke, lange Imprägnierzeiten und ist in großem Maßstab nicht wirtschaftlich umsetzbar.

Aufgabe der vorliegenden Erfindung war es, ein Verfahren zur Herstellung von Schaumstoffpartikel aus thermoplastische Elastomeren mit Polyamidsegmenten mit niedriger Schüttdichte bereitzustellen, die zu elastischen Schaumstoffformteilen mit hohem Rückstellvermögen verarbeitbar sind.

Die Aufgabe wurde durch ein Verfahren zur Herstellung von Schaumstoffpartikeln aus thermoplastischen Elastomeren mit Polyamidsegmenten gelöst, welches die folgenden Schritte umfasst:

(a) Herstellung einer Suspension von Granulaten des thermoplastischen Elastomeren in einem Suspensionsmedium,
(b) Zugabe eines Treibmittels,
(c) Imprägnieren der Granulate mit dem Treibmittel durch Erwärmen der Suspension in einem Druckbehälter auf eine Imprägniertemperatur IMT bei einem Imprägnierdruck IMP im Bereich von 150 bis 5500 kPa absolut,
(d) Entspannung der Suspension durch Entleerung des Druckbehälters über eine Entspannungsvorrichtung und Aufarbeitung der erhaltenen Schaumstoffpartikel;

wobei die Imprägnierung in Schritt (c) durch Erwärmen der Suspension mit einer Aufheizrate von 2°C/min oder höher auf die Imprägnierungstemperatur (IMT) afgeheizt und bei einer Temperatur im Bereich von 2°C über der Imprägniertemperatur (IMT) bis zu 5°C unterhalb der Imprägniertemperatur (IMT) für einen Zeitraum von 2 bis 100 Minuten gehalten wird.

Als thermoplastische Elastomere werden bevorzugt Polyamid-TPEs (TPA) mit Weichsegmenten mit Ether (TPA-ET), Ester (TPA-ES) oder sowohl Ether- als auch Esterverknüpfungen (TPA-EE), besonders bevorzugt Polyetherblockamide (PEBA) eingesetzt.

Bevorzugt weist das thermoplastische Elastomer einen Stickstoffgehalt im Bereich von 0,5 bis 7,5 Gew.-%, besonders bevorzugt im Bereich von 1 bis 5 Gew.-% auf. Der Stickstoffgehalt kann mittels Elementaranalyse bestimmt werden. Aus dem Stickstoffgehalt lassen sich der Anteil der Polyamidblöcke und damit der Hartsegmentanteil errechnen.

In der Regel werden die thermoplastischen Elastomere in Schritt (a) in Form von Granulaten eingesetzt. Bevorzugt werden zylinderförmige, ellipsoide oder kugelförmige Granulate mit einem mittleren Durchmesser von 0,2 bis 10 mm, insbesondere von 0,5 bis 5 mm verwendet. Bei zylinder- oder ellipsoidförmigem Granulat ist mit Durchmesser die längste Abmessung gemeint.

Die einzelnen Granulate haben in der Regel eine mittlere Masse im Bereich von 1 bis 50 mg, bevorzugt im Bereich von 5 bis 25 mg. Diese mittlere Masse der Granulate (Partikelgewicht) wird als arithmetrisches Mittel durch 3-maliges Wiegen von jeweils 10 Granulatpartikel bestimmt. Dieses bevorzugt zylinderförmige oder runde Granulat kann durch alle dem Fachmann bekannte Compoundierverfahren mit anschließender Granulierung als Kalt- oder Heißabschlag hergestellt werden. Beispielsweise durch Compoundierung, gegebenenfalls zusammen mit weiteren Zusatzstoffen in einem Zweischneckenextruder, Auspressen aus dem Extruder, gegebenenfalls Abkühlen und Granulieren. Entsprechende Verfahren sind beispielsweise im Kunststoff Taschenbuch, Hauser-Verlag, 28.Auflage, 2001 beschrieben.

Die Granulate können neben den thermoplastischen Elastomeren gegebenenfalls übliche Zusatzstoffe wie Antioxidantien, Stabilisatoren, Flammschutzmittel, Wachse, Füllstoffe, Pigmente und Farbstoffe enthalten. Bevorzugt werden zur Einstellung der Zellstruktur Nukleierungsmittel, wie Talkum, Paraffine, Wachse, Ruß, Graphit, pyrogene Kieselsäuren, natürliche oder synthetische Zeolithe, oder Bentonite eingesetzt. Diese werden in der Regel in Mengen im Bereich von 0,01 bis 5 Gew.-%, bezogen auf das Granulat, eingesetzt.

Das Granulat wird in einem geeigneten Suspensionsmedium, beispielsweise Wasser, polare organische Lösungsmittel wie Alkohole, Ketone oder Mischungen davon suspendiert. In der Regel wird als Suspensionsmedium Wasser eingesetzt.

In der Regel wird die Menge des Suspensionsmediums so gewählt, dass das Phasenverhältnis als Gewichtsverhältnis von Granulat zu Suspensionsmedium im Bereich von 0,2 bis 0,9 liegt.

Um eine gleichmäßige Verteilung des Granulates im Suspensionsmedium zu erreichen, werden in der Regel Suspendierhilfsmittel zugegeben. Geeignete Suspendierhilfsmittel sind wasserunlösliche anorganische Stabilisatoren wie Tricalciumphosphat, Magnesiumpyrophosphat, Metallcarbonate wie Calciumcarbonat sowie Polyvinylakohol und ionische oder nichtionische Tenside. Die Suspendierhilfsmittel werden üblicherweise in Mengen von 0,01 bis 5 Gew.-% eingesetzt.

In Schritt (b) wird ein Treibmittel zugegeben. In der Regel werden flüchtige Substanzen mit einem Siedepunkt bei Normaldruck im Bereich von -10 bis 125°C oder Gase, wie Kohlendioxid oder Stickstoff eingesetzt. Durch die Wahl der Art und Menge des Treibmittels können die Schüttdichte, Zellstruktur und Kristallinität der Polymermatrix beeinflusst werden. Als Treibmittel werden bevorzugt Kohlenwasserstoffe mit 3 bis 6 Kohlenstoffatomen, insbesondere n-Butan und iso-Butan, Kohlendioxid, Stickstoff oder Mischungen davon eingesetzt. Besonders bevorzugt wird Butan eingesetzt. Die Treibmittel werden in der Regel in Mengen von 1 bis 50 Gew.-%, bezogen auf das Granulat, eingesetzt.

Stickstoff kann auch als Co-Treibmittel bei einer Onset-Temperatur unterhalb des ersten Schmelzepeaks im DSC des thermoplastischen Elastomeren, beispielsweise im Bereich von 30 bis 75°C, durch Aufpressen und Erhöhung des Innendrucks im Imprägnierreaktor um 200 bis 3000 kPa zugeführt werden.

Die Imprägnierung in Schritt (c) erfolgt bevorzugt bei einer Imprägniertemperatur IMT im Bereich von 80 bis 180°C. Die Suspension wird mit einer Aufheizrate von 2°C/min oder höher auf die Imprägniertemperatur (IMT) aufgeheizt und bei einer Temperatur in Bereich von 2°C über der IMT bis zu 5°C unterhalb der IMT für einen Zeitraum von 2 bis 100 Minuten (Haltezeit HZ) gehalten.

Je nach Art und Menge des Treibmittels und der Temperatur bzw. der Beaufschlagung mit einem Gas stellt sich im geschlossenen Druckbehälter ein Druck (Imprägnierdruck IMP) ein. Die Imprägnierung in Schritt (c) erfolgt bei einem Imprägnierdruck IMP im Bereich von 150 bis 5500 kPa absolut, bevorzugt im Bereich von 500 bis 4000 kPa absolut. Bevorzugt wird in Schritt (c) der Druckbehälter bei einer Temperatur der Suspension im Bereich von 30 bis 75°C mit Stickstoff beaufschlagt und der Imprägnierdruck IMP eingestellt.

Die in Schritt (c) erhaltenen, treibmittelhaltigen Granulate werden in einem nachfolgenden Schritt (d) durch Entspannen zu Schaumstoffpartikeln verschäumt. Die Entspannung der Suspension in Schritt (d) erfolgt in der Regel durch Entleerung des Druckbehälters über eine geöffnete Absperrarmatur in einen Expansionsbehälter. Als Absperrarmatur kann ein Ventil, ein Schieber, ein Hahn oder eine Klappe verwendet werden, bevorzugt werden Kugelhähne.

Bei der Entleerung des Druckbehälters kann man die Suspension unmittelbar auf Atmosphärendruck (1013 Pa) oder in einen Zwischenbehälter mit einem Überdruck im Bereich von 100 bis 1000 kPa entspannen. Es kann auch vorteilhaft sein den Druck (Auspressdruck) im Druckbehälter während des Entspannens durch Nachpressen von Stickstoff konstant zu halten oder wenige Sekunden vor dem Entspannen den Druck durch Aufpressen von Stickstoff auf einen Auspressdruck weiter auf bis zu 6000 kPa, bevorzugt auf einen Bereich von 3000 bis 4000 kPa zu erhöhen. Durch die Erhöhung des Auspressdrucks können Schaumstoffpartikel mit niedrigerer Schüttdichte und engerer Schaumstoffpartikelgrößenverteilung erhalten werden.

Bevorzugt wird die Suspension in Schritt (d) nach der Entspannungsvorrichtung mit einem flüssigen Kühlmittel in Kontrakt gebracht. Dieser auch als Quenchen bezeichneter Schritt ist beispielsweise für die Herstellung von expandierbarem Polypropylen (EPP) in EP-A 2 336 225 beschrieben. Für das erfindungsgemäße Verfahren wird bevorzugt mit einer Wassermenge gearbeitet, die der Formel (Masse Quenchwasser)/(Masse Suspensionsmedium) = 0,5 - 2,0 entspricht.

Von den erhaltenen Schaumstoffpartikeln können gegebenenfalls in einem Aufarbeitungsschritt die verwendeten und noch anhaftenden Suspendierhilfsmittel entfernt werden. Anschließend werden die Schaumstoffpartikel gewaschen und durch Filtrieren oder Zentrifugieren von der flüssigen Phase abgetrennt und danach getrocknet.

Die nach dem erfindungsgemäßen Verfahren erhältlichen Schaumstoffpartikel aus thermoplastischen Elastomeren mit Polyamidsegmenten weisen bevorzugt eine Schüttdichte im Bereich von 20 bis 250 kg/m$^3$, besonders bevorzugt im Bereich von 35 bis 150 kg/m$^3$ und ganz besonders bevorzugt im Bereich von 40 bis 120 kg/m$^3$ auf.

Die expandierten Schaumstoffpartikel sind in der Regel zumindest annähernd kugelförmig. Die genaue geometrische Form bzw. der Durchmesser ist abhängig von der gewählten Geometrie und dem Partikelgewicht des Ausgangsgranulats und von der hergestellten Schüttdichte.

Die nach dem erfindungsgemäßen Verfahren hergestellten expandierten Schaumstoffpartikel sind überwiegend geschlossenzellig, wobei die Bestimmung des Volumenanteils geschlossener Zellen in Anlehnung an DIN EN ISO 4590 vom 01.08.2003 erfolgt, und weisen im Allgemeinen eine Zellendichte (Anzahl der Zellen/Fläche) von 1 bis 750 Zellen/mm$^2$, vorzugsweise 2 bis 500 Zellen/mm$^2$, insbesondere 5 bis 200 Zellen/mm$^2$ und besonders bevorzugt 10 bis 100 Zellen/mm$^2$, auf.

Zur Charakterisierung der kristallinen Struktur, können die expandierten Schaumstoffpartikel mit der Differential Scanning Calorimetrie (DSC) nach ISO 11357-3 (Deutsche Version vom 01.04.2013) untersucht werden. Hierzu werden 3 -5 mg der Schaumstoffpartikel zwischen 20°C und 200°C mit einer Aufheizrate von 20°C/min aufgeheizt und der resultierende Wärmestrom im 1. Lauf bestimmt. Es können je nach Typ der verwendeten thermoplastischen Elastomere im 1. Lauf der DSC jeweils mindestens zwei endotherme Peaks detektiert werden.

Die Schaumstoffpartikel können mit Wasserdampf zu Schaumstoffformteilen mit niedriger Formteildichte verschweißt werden. Bevorzugt liegt die Formteildichte im Bereich von 70 - 300 kg/m$^3$ besonders bevorzugt im Bereich von 80 - 200 kg/m$^3$.

Je nach Art und Anteil der Weichphase in den eingesetzten thermoplastischen Polyamidelastomeren können hierbei überraschend niedrige Dampfdrücke von unter 250 kPa (Überdruck), insbesondere im Bereich von 80 bis 150 kPa verwendet werden.

Auch die mechanischen Eigenschaften der Schaumstoffformteile, die durch Verschweißen der nach dem erfindungsgemäßen Verfahren erhältlichen Schaumstoffpartikeln erhalten werden, hängen in der Regel von den eingesetzten thermoplastischen Polyamidelastomeren sowie von der Art des verwendeten Füllverfahrens bei der Formteilherstellung ab.

Überraschenderweise zeichnen sich jedoch die Schaumstoffformteile über einen breiten Härtebereich (Shore Härte A) der eingesetzte thermoplastische Polyamidelastomeren, durch eine hohe Elastizität und Rückstellkraft aus. Sie weisen stets eine Kugel-Rückprallelastizität, gemessen nach DIN EN ISO 8307:2007 (Determination of resilience by ball rebound DIN EN ISO 8307:2008-03) von mindestens 55 % auf.

Die Erfindung wird anhand der folgenden Beispiele erläutert, ohne sie dadurch zu beschränken:

Beispiele

Prüfmethoden:

Zur Charakterisierung der verwendeten Rohstoffe, sowie der resultierenden Schaumstoffpartikel bzw. Formteile wurden u.a. folgende Prüfmethoden bzw. Kennwerte verwendet:

Schmelzpunktbestimmung mittels DSC:

Durchführung nach ISO 11357-3 (Deutsche Fassung vom 01.04.2013) mit DSC Q100 der Fa. TA Instruments. Zur Bestimmung des Schmelzpunktes des eingesetzten oder von anderen erfindungsgemäßen thermoplastischen Elastomeren in Granulatform werden 3 -5 mg in einem 1. Lauf zwischen 20°C und 200°C mit einer Aufheizrate von 20°C/min aufgeheizt, anschließend mit 10°C/min auf 20°C abgekühlt, gefolgt durch einen weiteren Aufheizzyklus (2. Lauf) mit einer Aufheizrate von 10°C/min. Als Schmelzpunkt wurde die Temperatur des Peakmaximums im 2. Lauf angegeben.

Kristalline Struktur nach DSC:

Zur Charakterisierung der kristallinen Struktur des kompakten thermoplastischen Elastomer bzw. der expandierten Schaumstoffpartikel werden 3 -5 mg zwischen 20°C und 200°C mit einer Aufheizrate von 20°C/min aufgeheizt und der resultierende Wärmestrom bestimmt.

Schüttdichte:

Die Bestimmung erfolgte in Anlehnung an DIN EN ISO 60: 2000-1. Dabei wurden die Schaumstoffpartikel mit Hilfe eines Trichters mit festgelegter Geometrie (vollständig mit Schüttgut gefüllt) in einen Messzylinder mit bekanntem Volumen eingefüllt, der Überschuss des Schüttguts mit einem geradkantigen Stab vom Messzylinder abgestreift und der Inhalt des Messzylinders durch wiegen festgestellt.

Der verwendete Trichter ist 40 cm hoch, hatte ein Öffnungswinkel von 35° und einen Auslauf mit 50 mm Durchmesser. Der Messzylinder hatte einen Innendurchmesser von 188 mm und ein Volumen von 10 l.

Die Schüttdichte (SD) berechnete sich aus Masse der Schüttung [kg] / 0,01 [m³].

Als Schüttdichte wurde der Mittelwert aus 3 Messungen in kg/m³ angegeben.

Verdichtungsgrad VG

Der Verdichtungsgrad VG ist das Verhältnis von Formteildichte (FT-Dichte) zu Schüttdichte (SD). VG = FT-Dichte [kg/m³] / SD [kg/m³].

Temperaturlagerung

Die Probekörper (180 x 60 x FT-Dicke mm) wurden in den auf die entsprechende Lagertemperatur vorgeheizten Wärmeschrank (110°C) gelegt und bei dieser Temperatur und 96 h gelagert. Beurteilung der Oberflächen / Kanten wie folgt:

Die Oberfläche und Kante der Prüfkörper wurde während der Lagerzeit alle 24 h entsprechend einer Notenskala beurteilt. Hierzu wurden die Prüfkörper kurzzeitig aus dem Wärmeschrank entnommen.

| Bewertung | Note |
|---|---|
| Keine Veränderung | 1 |
| Abrieb Kante | 2 |
| Zerfall Kante | 3 |
| Zerfall der Kante plus 0 bis 5 mm tiefe Schädigung der Oberfläche | 4 |
| Zerfall der Kante plus 5 bis 10 mm tiefe Schädigung der Oberfläche | 5 |
| Probe zerfällt unter leichtem Daumendruck | 6 |

Die Probekörper wurden nach Beendigung der Temperaturlagerung sorgfältig aus dem Wärmeschrank entnommen, bei Raumtemperatur 24h bei Raumbedingungen gelagert und anschließend die Dimensionsänderung mit dem Messschieber vermessen.

Die Dimensionsänderung (Länge, Breite, Höhe) wird nach folgender Formel berechnet:

$$DÄ = [ ( L_0 - L_1) / L_0 ) ] \times 100$$

DÄ = Dimensionsänderung in %
$L_0$ = ursprüngliches Maß
$L_1$ = Maß nach der Wärmelagerung

Die Temperaturbeständigkeit war in Ordnung (i.O.), wenn Oberflächen und Kanten keine Veränderungen aufweisen und die mittlere Dimensionsänderung über Länge, Breite und Höhe < 10% war. Sie ist eingeschränkt, wenn diese Dimensionsänderung nur bei Lagerung bei tieferen Temperaturen erreicht wird.

Einsatzstoffe

In den erfindungsgemäßen Beispielen wurde als thermoplastisches Polyamidelastomer (TPA) ein TPA-EE d.h. ein Polyetherblockamid (PEBA) eingesetzt. Solche Produkte werden z.B. von der Arkema Speciality Polyamides unter der Handelsbezeichnung PEBAX geliefert. Die in Tabelle 1 aufgelisteten Produkte bestehen aus flexiblen Polytetrahydrofuran und kristallinen Polyamideinheiten (PA-12).

Tabelle 1: Eingesetzte thermoplastische Polyamidelastomere

| Pebax | | 2533 SA 01 | 3533 SA 01 | 4033 SA 01 | 7233 SA 01 |
|---|---|---|---|---|---|
| | | | | | |

(fortgesetzt)

| Pebax | | 2533 SA 01 | 3533 SA 01 | 4033 SA 01 | 7233 SA 01 |
|---|---|---|---|---|---|
| Dichte [g/cm³] | ISO 1183 | 1,00 | 1,00 | 1,00 | 1,01 |
| Schmelzpunkt[°C] | ISO 11357 | 134 | 144 | 160 | 174 |
| Vicat-Temperatur (bei 1 daN) [°C] | ISO 306 | 58 | 77 | 131 | 164 |
| Härte [Shore A / Shore D] | ISO 868 | 77 / 27 | 82 / 33 | 90 / 42 | - /69 |
| Charakterisierung nach beschriebenen Methoden | | | | | |
| Granulat, Partikelgewicht [mg] | | 18 | 21 | 21 | 17 |
| Granulat, Schüttdichte [kg/m³] | | 602 | 589 | 614 | 588 |
| DSC Tmax (1. Lauf) [°C] | | 70 / 142 | 78 / 149 | - / 164 | - / 171 |
| Elementaranalyse (EA) N [%] | | 1,4 | 1,8 | 3,4 | 6,6 |
| Anteil PA-Block [Gew.-%] (berechnet aus N von EA) | | 19,8 | 25,4 | 48,0 | 93,1 |

Herstellung des expandierten thermoplastischen Elastomers

Allgemeine Versuchsbeschreibung

Es wurde Granulat mit einem Partikelgewicht von ca.19 mg eingesetzt, dessen Zusammensetzung in Tabelle 1 beschrieben ist.

Beispiel 1-4 und 6-13:

Die Versuche wurden mit einem Kesselfüllgrad von 80 % und einem Phasenverhältnis von 0,41 durchgeführt.
100 Gewichtsteile (entsprechend 28,5 Gew.-%, bezogen auf die gesamte Suspension ohne Treibmittel) des Granulats, 245 Gewichtsteile (entsprechend 69,6 Gew.-%, bezogen auf die gesamte Suspension ohne Treibmittel) Wasser, 6,7 Gewichtsteile (entsprechend 1,9 Gew.-%, bezogen auf die gesamte Suspension ohne Treibmittel) Calciumcarbonat, 0,13 Gewichtsteile (entsprechend 0,04 Gew.-%, bezogen auf die gesamte Suspension ohne Treibmittel) einer oberflächenaktiven Substanz (Lutensol AT 25) und die entsprechende Menge Butan als Treibmittel (bezogen auf die eingesetzte Granulatmenge) wurden unter Rühren erhitzt. Dann wurde bei 50°C der Flüssigphase zusätzlich Stickstoff aufgepresst und der Innendruck auf einen vorher definierten Druck (800 kPa) eingestellt. Anschließend wird bei Erreichen der Imprägniertemperatur (IMT) und gegebenenfalls nach Einhaltung einer Haltezeit (HZ) und bei dem sich am Ende eingestellten Imprägnierdruck (IMP) über eine Entspannungsvorrichtung entspannt. Der Gasraum wird hierbei auf einen festgelegten Auspressdruck eingestellt und während der Entspannung konstant gehalten. Der Entspannungsstrahl kann nach der Entspannungseinrichtung gegebenenfalls noch mit einem bestimmten Volumenstrom von Wasser mit einer bestimmten Temperatur gekühlt werden (Wasserquench). In den Beispielen 1-4 und 10 wurde mit einer Wassermenge von 25°C gekühlt, die dem Verhältnis (Masse Quenchwasser)/(Masse Suspensionsmedium = 0,85 entspricht.
Nach Entfernung der Suspendierhilfsmittel (Dispergiermittel und Seife) und der Trocknung, wird die Schüttdichte (SD) der resultierenden Schaumstoffpartikel gemessen.

Beispiel 5:

Wie Beispiel 1-4. Als Treibmittel werden jedoch 12 Gew.-% $CO_2$ anstelle von Butan eingesetzt und es wird kein zusätzlicher Stickstoff aufgepresst

Beispiel 14:

Der Versuch wurde mit einem Kesselfüllgrad von 70 % und mit einem Phasenverhältnis von 0,27 durchgeführt.
100 Gewichtsteile (entsprechend 21,2 Gew.-%, bezogen auf die gesamte Suspension ohne Treibmittel) des Granulats, 365 Gewichtsteile (entsprechend 77,4 Gew.-%, bezogen auf die gesamte Suspension ohne Treibmittel) Wasser, 6,7 Gewichtsteile (entsprechend 1,4 Gew.-%, bezogen auf die gesamte Suspension ohne Treibmittel) Calciumcarbonat, 0,14 Gewichtsteile (entsprechend 0,03 Gew.-%, bezogen auf die gesamte Suspension ohne Treibmittel) einer oberflächenaktiven Substanz (Lutensol AT 25) und die entsprechende Menge Butan als Treibmittel (bezogen auf die eingesetzte Granulatmenge) wurden unter Rühren erhitzt. Es erfolgt bei 50°C keinzusätzliches Aufpressen von Stickstoff. Anschließend wird bei Erreichen der Imprägniertemperatur (IMT) und bei dem sich am Ende eingestellten Imprägnierdruck (IMP) über eine Entspannungsvorrichtung entspannt. Der Gasraum wird hierbei auf einen festgelegten Auspressdruck (3 700 kPa) eingestellt und während der Entspannung konstant gehalten.

Nach Entfernung der Suspendierhilfsmittel (Dispergiermittel und Seife) und der Trocknung, wird die Schüttdichte (SD) der resultierenden Schaumstoffpartikel gemessen.

Beispiel 15 und 16:

Die Versuche wurden mit einem Kesselfüllgrad von 80 % und mit einem Phasenverhältnis von 0,31 durchgeführt.

100 Gewichtsteile (entsprechend 23,4 Gew.-%, bezogen auf die gesamte Suspension ohne Treibmittel) des Granulats, 320 Gewichtsteile (entsprechend 75,0 Gew.-%, bezogen auf die gesamte Suspension ohne Treibmittel) Wasser, 6,7 Gewichtsteile (entsprechend 1,6 Gew.-%, bezogen auf die gesamte Suspension ohne Treibmittel) Calciumcarbonat, 0,13 Gewichtsteile (entsprechend 0,03 Gew.-%, bezogen auf die gesamte Suspension ohne Treibmittel) einer oberflächenaktiven Substanz (Lutensol AT 25) und die entsprechende Menge Butan als Treibmittel (bezogen auf die eingesetzte Granulatmenge) wurden unter Rühren erhitzt.

Bei Beispiel 15 wird kein zusätzlicher Stickstoff aufgepresst. Bei Beispiel 16 wurde bei 50°C der Flüssigphase zusätzlich Stickstoff aufgepresst und der Innendruck auf einen vorher definierten Druck (800kPa) eingestellt.

Der weitere Verlauf des Versuchs erfolgt wie in Beispiel 14.

Die Versuchsparameter (Treibmittel, Treibmittelmenge, Imprägniertemperatur (IMT), Imprägnierdruck (IMP), Auspressdruck) und die resultierende Schüttdichte (SD) für die erfindungsgemäßen Beispiele 1 bis 16 sind in Tabelle 2 aufgeführt.

Das Phasenverhältnis ist definiert als das Verhältnis von Granulat, gemessen in Kilogramm, zu Suspensionsmedium, welches bevorzugt Wasser ist, ebenfalls in Kilogramm.

Als Haltezeit (HZ) wird die Zeit [min] definiert, bei der sich die Temperatur der Flüssigphase in einem Temperaturbereich von 5°C unter der IMT und 2°C über der IMT befindet.

Herstellung der Formteile:

Die Herstellung der Formteile erfolgte auf einem handelsüblichen EPP-Formteilautomaten (Typ K68 der Fa. Kurtz GmbH). Es wurden mit Werkzeugen der Maße 315x210x25 mm und 315*210*20 mm quaderförmige Prüfkörper mit unterschiedlichen Dicken hergestellt. Die Formteile wurden nach dem Druckfüllverfahren oder nach dem Crackfüllverfahren hergestellt.

Nach der Herstellung wurden die Formteile 16 h bei 60°C gelagert.

Die Ergebnisse der anschließenden Formteilprüfungen sind in Tabelle 3 aufgeführt.

Tabelle 2: Versuchsparameter für die Beispiele 1 bis 16

| Beispiel | Granulat Typ | Treibmittel | Treibmittelgehalt [Gew.-%] | T [°C] der Suspension bei $N_2$-Dosierung | IMT [°C] | Haltezeit [min] | IMP [kPa] | Auspressdruck [kPa] | Wasserquench | Schüttdichte SD [kg/m³] |
|---|---|---|---|---|---|---|---|---|---|---|
| Beispiel 1 | Pebax 2533 SA 01 | Butan | 24,0 | 50 | 100,0 | 2 | 1970 | 3400 | ja | 94 |
| Beispiel 2 | Pebax 2533 SA 01 | Butan | 24,0 | 50 | 95,0 | 2 | 1830 | 3400 | ja | 141 |
| Beispiel 3 | Pebax 2533 SA 01 | Butan | 24,0 | 50 | 90,0 | 15 | 1670 | 3400 | ja | 213 |
| Beispiel 4 | Pebax 2533 SA 01 | Butan | 24,0 | 50 | 95,0 | 13 | 1800 | 3400 | ja | 104 |
| Beispiel 5 | Pebax 2533 SA 01 | $CO_2$ | 12,0 | - | 100,0 | 11 | 3010 | 3700 | ja | 215 |
| Beispiel 6 | Pebax 3533 SA 01 | Butan | 24,0 | 50 | 100,0 | 4 | 1810 | 3400 | nein | 206 |
| Beispiel 7 | Pebax 3533 SA 01 | Butan | 24,0 | 50 | 103,0 | 20 | 1960 | 3400 | nein | 136 |
| Beispiel 8 | Pebax 3533 SA 01 | Butan | 24,0 | 50 | 105,5 | 17 | 2020 | 3400 | nein | 107 |
| Beispiel 9 | Pebax 3533 SA 01 | Butan | 24,0 | 50 | 106,5 | 15 | 2030 | 3400 | nein | 92 |
| Beispiel 10 | Pebax 3533 SA 01 | Butan | 24,0 | 50 | 106,5 | 17 | 2020 | 3400 | ja | 131 |

(fortgesetzt)

| Beispiel | Granulat Typ | Treibmittel | Treibmittelgehalt [Gew.-%] | T [°C] der Suspension bei N₂-Dosierung | IMT [°C] | Haltezeit [min] | IMP [kPa] | Auspressdruck [kPa] | Wasserquench | Schüttdichte SD [kg/m³] |
|---|---|---|---|---|---|---|---|---|---|---|
| Beispiel 11 | Pebax 4033 SA 01 | Butan | 24,0 | 50 | 132,0 | 3 | 2750 | 3700 | nein | 81 |
| Beispiel 12 | Pebax 4033 SA 01 | Butan | 24,0 | 50 | 135,0 | 3 | 2780 | 3700 | nein | 40 |
| Beispiel 13 | Pebax 4033 SA 01 | Butan | 24,0 | 50 | 130,0 | 3 | 2880 | 3700 | nein | 113 |
| Beispiel 14 | Pebax 7233 SA 01 | Butan | 24,0 | - | 156,0 | 3 | 2350 | 3700 | nein | 84 |
| Beispiel 15 | Pebax 7233 SA 01 | Butan | 24,0 | - | 156,0 | 3 | 2960 | 3700 | nein | 36 |
| Beispiel 16 | Pebax 7233 SA 01 | Butan | 24,0 | 50 | 152,0 | 3 | 3530 | 3700 | nein | 48 |

Tabelle 3: Prüfungen an Formteilen, hergestellt aus Schaumstoffpartikel der Beispiele 1 bis 16

| Formteil | Schaumstoffpartikel (Tabelle 2) | VG | Formteildichte [kg/m³] | Zugspannung [kPa] | Druckspannung [kPa] | Bruchdehnung [%] | Rückprallelastizität [%] | Temperaturstabilität |
|---|---|---|---|---|---|---|---|---|
| | | | DIN EN ISO 845 (01.10.2009) | DIN EN ISO 1798 (01.04.2008) | DIN EN ISO 844 (01.11.2014) bei 50% Stauchung | DIN EN ISO 1798 (01.04.2008) | DIN EN ISO 8307 (01.01.2008) | |
| FT-1 | Beispiel 1 | 2,1 | 200 | 400 | 165 | 75 | 69 | n.b. |
| FT-2 | Beispiel 2 | 1,8 | 260 | 450 | 300 | 75 | 68 | eingeschränkt (i.O. bei 90°C) |
| FT-4 | Beispiel 4 | 2,0 | 210 | 250 | 165 | 55 | 73 | n.b. |
| FT-5 | Beispiel 5 | 2,0 | 410 | 980 | 650 | 138 | 66 | n.b. |
| FT-7 | Beispiel 7 | 2,1 | 280 | 490 | 380 | 56 | 75 | i.O. (DÄ <10%) |
| FT-8 | Beispiel 8 | 2,0 | 215 | 200 | 250 | 26 | 75 | n.b. |
| FT-9 | Beispiel 9 | 2,4 | 220 | 450 | 260 | 58 | 73 | i.O. (DÄ <10%) |
| FT-10 | Beispiel 10 | 2,1 | 280 | 480 | 390 | 55 | 74 | i.O. (DÄ <10%) |
| FT-11 | Beispiel 11 | 1,9 | 150 | 530 | 360 | 35 | 65 | i.O. (DÄ <1%) |
| FT-12 | Beispiel 12 | 2,4 | 95 | 350 | 170 | 45 | 64 | n.b. |
| FT-13 | Beispiel 13 | 1,7 | 190 | 490 | 500 | 35 | 61 | i.O. (DÄ <1%) |
| FT-16 | Beispiel 16 | 4,0 | 160 | 200 | 450 | 20 | 45 | i.O. (DÄ <1%) |

n.b. nicht bestimmt
FT-5 und FT-16 wurden im Crackfüllverfahren hergestellt.

EP 3 475 352 B1

**Patentansprüche**

1. Verfahren zur Herstellung von Schaumstoffpartikeln aus thermoplastischen Elastomeren mit Polyamidsegmenten, umfassend die Schritte:

   (a) Herstellung einer Suspension von Granulaten des thermoplastischen Elastomeren in einem Suspensionsmedium,
   (b) Zugabe eines Treibmittels,
   (c) Imprägnieren der Granulate mit dem Treibmittel durch Erwärmen der Suspension in einem Druckbehälter auf eine Imprägniertemperatur IMT bei einem Imprägnierdruck IMP im Bereich von 150 bis 5500 kPa absolut,
   (d) Entspannung der Suspension durch Entleerung des Druckbehälters über eine Entspannungsvorrichtung und Aufarbeitung der erhaltenen Schaumstoffpartikel;

   wobei die Imprägnierung in Schritt (c) durch Erwärmen der Suspension mit einer Aufheizrate von 2°C/min oder höher auf die Imprägnierungstemperatur (IMT) afgeheizt und bei einer Temperatur im Bereich von 2°C über der Imprägniertemperatur (IMT) bis zu 5°C unterhalb der Imprägniertemperatur (IMT) für einen Zeitraum von 2 bis 100 Minuten gehalten wird.

2. Verfahren nach Anspruch 1, **dadurch gekennzeichnet, dass** als thermoplastische Elastomere Polyetherblockamide (PEBA) eingesetzt werden.

3. Verfahren nach Anspruch 1 oder 2, **dadurch gekennzeichnet, dass** das thermoplastische Elastomer einen Stickstoffgehalt im Bereich von 0,5 bis 7,5 Gew.-% aufweist.

4. Verfahren nach Anspruch 1 oder 2, **dadurch gekennzeichnet, dass** das thermoplastische Elastomere eine Vicat-Erweichungstemperatur nach DIN EN ISO 306 bei einer Prüfkraft von 10 N von 40 bis 170 aufweist.

5. Verfahren nach einem der Ansprüche 1 bis 4, **dadurch gekennzeichnet, dass** die Granulate eine mittlere Masse im Bereich von 1 bis 50 mg aufweisen.

6. Verfahren nach einem der Ansprüche 1 bis 5, **dadurch gekennzeichnet, dass** als Suspensionsmedium Wasser eingesetzt wird.

7. Verfahren nach einem der Ansprüche 1 bis 6, **dadurch gekennzeichnet, dass** als Treibmittel ein Kohlenwasserstoff mit 3 bis 6 Kohlenstoffatomen, Kohlendioxid, Stickstoff oder Mischungen davon eingesetzt wird.

8. Verfahren nach einem der Ansprüche 1 bis 7, **dadurch gekennzeichnet, dass** die Imprägnierung in Schritt (c) bei einer Imprägniertemperatur IMT im Bereich von 80 bis 180°C erfolgt.

9. Verfahren nach einem der Ansprüche 1 bis 8, **dadurch gekennzeichnet, dass** in Schritt (c) der Druckbehälter bei einer Temperatur der Suspension im Bereich von 30 bis 75°C mit Stickstoff beaufschlagt wird, so dass sich ein Imprägnierdruck IMP im Bereich von 500 bis 4000 kPa einstellt.

10. Verfahren nach einem der Ansprüche 1 bis 9, **dadurch gekennzeichnet, dass** die Entspannung der Suspension in Schritt (d) durch Entleerung des Druckbehälters über einen Kugelhahn in einen Expansionsbehälter erfolgt.

11. Verfahren nach einem der Ansprüche 1 bis 10, **dadurch gekennzeichnet, dass** die Suspension in Schritt (d) nach der Entspannungsvorrichtung mit einem flüssigen Kühlmittel in Kontakt gebracht wird.

**Claims**

1. Method for producing foam particles from thermoplastic elastomers with polyamide segments, comprising the steps:

   (a) producing a suspension of granules of the thermoplastic elastomer in a suspension medium,
   (b) adding a blowing agent,
   (c) impregnating the granules with the blowing agent by heating the suspension in a pressure vessel to an impregnation temperature IMT at an impregnation pressure IMP in the range of 150 to 5500 kPa absolute,

(d) depressurizing the suspension by emptying the pressure vessel via a depressurization device and processing the foam particles obtained;

wherein the impregnation in step (c) is carried out by heating the suspension at a heating rate of 2°C/min or higher to the impregnation temperature (IMT) and maintaining it at a temperature in the range from 2°C above IMT to 5°C below IMT for a period of 2 to 100 minutes.

2. Method according to claim 1, **characterized in that** polyether block amides (PEBA) are used as thermoplastic elastomers.

3. Method according to claim 1 or 2, **characterized in that** the thermoplastic elastomer has a nitrogen content in the range of 0.5 to 7.5 wt.%.

4. Method according to claim 1 or 2, **characterized in that** the thermoplastic elastomer has a Vicat softening temperature according to DIN EN ISO 306 at a test force of 10 N in the range of 40 to 170°C.

5. Method according to any of claims 1 to 4, **characterized in that** the granules have an average mass in the range of 1 to 50 mg.

6. Method according to any of claims 1 to 5, **characterized in that** water is used as the suspension medium.

7. Method according to any of claims 1 to 6, **characterized in that** the blowing agent used is a hydrocarbon with 3 to 6 carbon atoms, carbon dioxide, nitrogen, or mixtures thereof.

8. Method according to any of claims 1 to 7, **characterized in that** the impregnation in step (c) is carried out at an impregnation temperature IMT in the range of 80 to 180°C.

9. Method according to any of claims 1 to 8, **characterized in that** in step (c) the pressure vessel is pressurized with nitrogen at a suspension temperature in the range of 30 to 75°C, such that an impregnation pressure IMP in the range of 500 to 4000 kPa is established.

10. Method according to any of claims 1 to 9, **characterized in that** the depressurization of the suspension in step (d) is carried out by emptying the pressure vessel via a ball valve into an expansion vessel.

11. Method according to any of claims 1 to 10, **characterized in that** after the depressurization device, the suspension in step (d) is brought into contact with a liquid coolant.

**Revendications**

1. Procédé de fabrication de particules de mousse à partir d'élastomères thermoplastiques comportant des segments de polyamide, comprenant les étapes :

   (a) produire une suspension de granulés de l'élastomère thermoplastique dans un milieu de suspension,
   (b) ajouter un agent gonflant,
   (c) imprégner les granulés avec l'agent gonflant en chauffant la suspension dans un récipient sous pression jusqu'à une température d'imprégnation IMT à une pression d'imprégnation IMP comprise entre 150 et 5500 kPa absolus,
   (d) détendre la suspension en vidant le récipient sous pression via un dispositif de détente et traiter les particules de mousse obtenues ;

   laquelle imprégnation de l'étape (c) est réalisée en chauffant la suspension à une vitesse de chauffage de 2°C/min ou plus jusqu'à la température d'imprégnation (IMT) et en la maintenant à une température comprise entre 2°C au-dessus de l'IMT et 5°C en dessous de l'IMT pendant une durée de 2 à 100 minutes.

2. Procédé selon la revendication 1, **caractérisé en ce que** des polyéther-block-amides (PEBA) sont utilisés comme élastomères thermoplastiques.

3. Procédé selon la revendication 1 ou 2, **caractérisé en ce que** l'élastomère thermoplastique présente une teneur en azote comprise entre 0,5 et 7,5 % en poids.

4. Procédé selon la revendication 1 ou 2, **caractérisé en ce que** l'élastomère thermoplastique présente une température de ramollissement Vicat selon la norme DIN EN ISO 306 sous une charge d'essai de 10 N comprise entre 40 et 170°C.

5. Procédé selon l'une quelconque des revendications 1 à 4, **caractérisé en ce que** les granulés présentent une masse moyenne comprise entre 1 et 50 mg.

6. Procédé selon l'une quelconque des revendications 1 à 5, **caractérisé en ce que** l'eau est utilisée comme milieu de suspension.

7. Procédé selon l'une quelconque des revendications 1 à 6, **caractérisé en ce que** l'agent gonflant utilisé est un hydrocarbure comportant de 3 à 6 atomes de carbone, du dioxyde de carbone, de l'azote ou des mélanges de ceux-ci.

8. Procédé selon l'une quelconque des revendications 1 à 7, **caractérisé en ce que** l'imprégnation de l'étape (c) est réalisée à une température d'imprégnation IMT comprise entre 80 et 180°C.

9. Procédé selon l'une quelconque des revendications 1 à 8, **caractérisé en ce que**, dans l'étape (c), le récipient sous pression est mis sous pression avec de l'azote à une température de la suspension comprise entre 30 et 75°C, de sorte qu'une pression d'imprégnation IMP comprise entre 500 et 4000 kPa s'établit.

10. Procédé selon l'une quelconque des revendications 1 à 9, **caractérisé en ce que** la détente de la suspension dans l'étape (d) est effectuée en vidant le récipient sous pression via un robinet à bille dans un récipient d'expansion.

11. Procédé selon l'une quelconque des revendications 1 à 10, **caractérisé en ce que**, après le dispositif de détente, la suspension dans l'étape (d) est mise en contact avec un fluide frigorigène liquide.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011134996 A
- WO 2006045513 A
- WO 2016030026 A
- WO 2016030333 A
- WO 2014198779 A
- JP 60042432 A
- EP 2336225 A1
- WO 2015052019 A
- WO 2015052265 A
- EP 2336225 A

**In der Beschreibung aufgeführte Nicht-Patentliteratur**

- Kunststoff Taschenbuch. Hauser-Verlag, 2001, vol. 28